# EUROPÄISCHE PATENTSCHRIFT

(11) **EP 1 238 829 B1**
(45) Veröffentlichungstag und Bekanntmachung des Hinweises auf die Patenterteilung: **07.04.2010**
(21) Anmeldenummer: 02004829.4
(22) Anmeldetag: 02.03.2002
(51) Int. Cl.: B60C 23/00

(54) **Reifendruckeinstellanlage**
System for adjusting tyre pressure
Système pour ajuster la pression de pneumatiques

(30) Priorität: 10.03.2001 DE 10111532
(43) Veröffentlichungstag der Anmeldung: 11.09.2002
(73) Patentinhaber: DEERE & COMPANY, Moline, Illinois 61265-8098 (US)
(72) Erfinder: Tarasinski, Nicolai, Dr., 67227 Frankenthal (DE)
(74) Vertreter: Magin, Ludwig Bernhard

(56) Entgegenhaltungen:
- DE-A- 3 039 620
- US-A- 5 587 698

## Beschreibung

Die Erfindung betrifft eine Reifendruckeinstellanlage zur Einstellung des Drucks der an einem Fahrzeug montierten Reifen mit einer zwischen einer Druckluftquelle und den Reifen angeordneten Ventilanordnung.

Insbesondere landwirtschaftliche Fahrzeuge, wie Traktoren, Mähdrescher und Anhänger sowie vergleichbare Fahrzeuge, die auf nachgiebigem Boden eingesetzt werden, sind häufig mit großvolumigen Reifen ausgestattet, um eine gute Geländegängigkeit, gute Traktionseigenschaften und einen geringen Bodendruck zu erreichen. Traktion und Bodendruck sind besonders niedrig, wenn ein niedriger Luftdruck in den Reifen eingestellt ist, so dass im Feld ein Betrieb bei niedrigem Reifendruck bevorzugt wird. Allerdings sinkt mit abnehmendem Reifendruck das Tragvermögen der Reifen, und es nehmen der Rollwiderstand und der Reifenverschleiß zu. Daher sollte bei Transportfahrten auf unnachgiebigem Boden ein hoher Luftdruck gewählt werden. Um diese konträren Forderungen zu erfüllen, werden Reifendruckregelanlagen verwendet, wie sie beispielsweise aus der DE-A-198 04 249 oder der US-A-5,647,927 hervorgehen. Mit Hilfe einer Reifendruckregelanlage lässt sich der Reifenluftdruck optimal an die Erfordernisse des jeweiligen Arbeitseinsatzes anpassen. Der zum Befüllen der Reifen erforderliche Luftdruck wird durch einen Kompressor bereitgestellt, der einen Luftdruckbehälter speist.

Aus der US 5,587,698 ist eine Reifendruckeinstellanlage gemäß den Merkmalen des Oberbegriffs des Anspruchs 1 bekannt.

Um die Füllzeiten gering zu halten, wird meist ein Teil der zum Befüllen erforderlichen Luftmenge unter einem Druck in dem Luftdruckbehälter gespeichert, der weit über dem Luftdruck liegt, der für das Befüllen erforderlich ist. Die Druckluft des Luftdruckbehälters wird bei Bedarf auf den zum Befüllen der Reifen erforderlichen Druck entspannt. Hierbei geht Energie verloren. Der, zum Hochverdichten der Luft erforderliche Energieaufwand übersteigt bei weitem den Energieaufwand, der nötig ist, um die Reifen auf Betriebsdruck zu bringen. Des weiteren geht von den unter hohem Druck stehenden Luftdruckbehältern eine Betriebsgefahr aus. Dieser muss durch besondere bauliche Maßnahmen Rechnung getragen werden.

Die Zufuhr der Druckluft zu den Reifen erfolgt entweder über Schläuche, die bei Stillstand des Fahrzeugs angeschlossen und wieder abgenommen werden müssen, oder über Drehdurchführungen im Bereich der Radachsen. Bei diesen Drehdurchführungen ist die Abdichtung problematisch, da der hohe Luftdruck des Vorratsbehälters abzudichten ist und die Dichtungen hohen Relativgeschwindigkeiten aufgrund der hohen Fahrgeschwindigkeiten ausgesetzt sind.

Aufgrund des hohen Druckunterschiedes zwischen Vorratsbehälter und Reifen treten hohe Strömungsgeschwindigkeiten in den Zuführungsteilen auf, die wiederum einen Energieverlust bewirken. Die beim Hochverdichten aufgewendete Arbeit kann nicht wiedergewonnen werden, sondern geht als Drosselverlust verloren. Es ist nicht möglich, diesen Energieverlust durch größere Strömungsquerschnitte zu vermindern, da damit auch die Strömungsgeschwindigkeit steigen würde. Als negative Begleiterscheinung treten unerwünschte Strömungsgeräusche auf.

Die der Erfindung zugrunde liegende Aufgabe wird darin gesehen, eine Reifendruckeinstellanlage der eingangs genannten Art anzugeben, durch welche die vorgenannten Probleme überwunden werden. Insbesondere soll der zum Befüllen der Reifen erforderliche Energieaufwand reduziert werden, und es soll möglich sein, den erforderlichen Druck möglichst gering zu halten, um die mit hohen Drücken verbundenen Probleme zu vermeiden.

Die Aufgabe wird erfindungsgemäß durch die Lehre des Patentanspruchs 1 gelöst. Weitere vorteilhafte Ausgestaltungen und Weiterbildungen der Erfindung gehen aus,den Unteransprüchen hervor.

Die erfindungsgemäße Reifenbefüll- und entleeranlage verzichtet auf die Verwendung eines Kompressors als Druckquelle. Vielmehr wird als Druckquelle ein zur Aufladung des Fahrzeugverbrennungsmotors vorgesehener Abgasturbolader verwendet, der im Fahrzeug bereits vorhanden ist. Es ist damit nicht erforderlich für die Reifendruckregelanlage einen Kompressor bereitzustellen. Auch kann in der Regel der bisher übliche Vorratsbehälter entfallen. Dies bringt erhebliche Kostenvorteile mit sich.

Zur Druckversorgung der Reifendruckeinstelleinrichtung steht der Ladeluftkanal, also der Ausgang der Verdichtungsturbine des Turboladers, mit der Ventilanordnung der Reifendruckeinstelleinrichtung in Verbindung. Ein üblicher Turbolader weist eine hohe Förderleistung auf, wobei der Druck im Ladeluftkanal geringer ist, als der Ausgangsdruck eines üblichen Kompressors. Daher sind die Komponenten einer erfindungsgemäß ausgebildeten Reifendruckeinstelleinrichtung weniger hohen Druckbelastungen ausgesetzt. Insbesondere ist es ohne Kostennachteile möglich, die Druckleitungen mit größeren, als bisher üblichen Querschnitten auszubilden, die sich mit geringem Aufwand, gegebenenfalls aus Kunststoff fertigen lassen. Durch den geringeren Betriebsdruck lassen sich Betriebsgefahren vermeiden und die Abdichtung der Drehdurchführungen weniger aufwändig gestalten. In den großen Leitungsquerschnitten sind die Strömungsgeschwindigkeiten relativ gering, was sich auf die Geräuschunterdrückung günstig auswirkt.

Durch den Verzicht auf das bisher übliche Hochverdichten der Druckluft lassen sich Drosselverluste erheblich reduzieren, so dass sich auch der erforderliche Energieaufwand zum Befüllen der Reifen stark absenken lässt.

Vorzugsweise ist zwischen dem Ladeluftkanal des Turboladers und den zu den Reifen führenden Verteilerleitungen wenigstens ein Verbindungsventil angeordnet. Es kann sich um ein elektrisch, insbesondere elektromagnetisch steuerbares Ventil handeln, das nur dann geöffnet wird, wenn ein Befüllen der Reifen erfolgen soll. Solch ein Verbindungsventil lässt sich in Abhängigkeit elektrischer Signale öffnen, um den Druck in den Verteilerleitungen anzuheben oder abzusenken. Bei fehlendem elektrischen Signal ist das Ventil geschlossen. Für den normalen Betrieb des Arbeitsfahrzeugs lässt sich somit der Turbolader von der Reifenbefüllanlage trennen und eine gegenseitige Beeinflussung vermeiden.

Es ist auch von Vorteil, an den Ladeluftkanal des Turboladers ein Waste-Gate-Ventil (siehe beispielsweise die US-A-5,857,337) anzuschließen. Dieses wird verwendet, um den Betriebspunkt der Verbrennungskraftmaschine optimal einzustellen, sofern die Funktion des Reifenbefüllens momentan nicht gebraucht wird. Das Verbindungsventil und das Waste-Gate-Ventil können gegebenenfalls zu einer Ventileinheit zusammengefasst sein.

Möglicherweise reicht nicht bei allen Betriebsbedingungen des Verbrennungsmotors die Drehzahl des Turboladers aus, um einen Druck bereitzustellen, der über dem gewünschten Reifendruck liegt. Zur Anhebung der Turboladerdrehzahl und zur Bereitstellung einer ausreichenden Luftmenge bei ausreichendem Luftdruck schlägt eine bevorzugte Weiterbildung der Erfindung eine Abgasnacherwärmungseinrichtung vor, welche zweckmäßigerweise derart ausgebildet ist, dass bedarfsweise Kraftstoff aus dem Kraftstofftank in einen Brennraum des Abgasstrangs des Turboladers, insbesondere in den Bereich vor der Turbolader-Abgasturbine zugeführt, gezündet und verbrannt wird.

Die Nacherwärmungseinrichtung dient nicht nur der Gewährleistung eines ausreichenden Drucks für die Reifenbefülleinrichtung, sondern kann in besonders vorteilhafter Weise auch dann, wenn die Reifenbefüllanlage nicht benutzt wird, zur Ladedruckerhöhung dienen, um die Leistung bzw. das Drehmoment des bei niedriger Drehzahl laufenden Verbrennungsmotors zu steigern. Dies wirkt sich besonders bei Beschleunigungen des Arbeitsfahrzeugs vorteilhaft aus.

Vorzugsweise wird die dem Brennraum zugeführte Kraftstoffmenge in Abhängigkeit der Verbrennungskraftmaschinendrehzahl, der Turboladerdrehzahl und/oder der Temperatur der in die Abgasturbine eintretenden Abgasluft eingestellt. Wenn kein Drehzahlsensor zur Erfassung der Turboladerdrehzahl bereit steht, kann die Turboladerdrehzahl oder ein vergleichbarer Wert aus den gemessenen Temperaturen und Drücken des Turboladers berechnet werden. Die dem Abgasstrang zugeführte Kraftstoffmenge wird so begrenzt, dass eine vorgegebene Turboladerdrehzahl nicht überschritten wird. Insbesondere wird die dem Abgasstrang zugeführte Kraftstoffmenge so gewählt, dass die zum Füllen der Reifen verwendete Luft nicht höher verdichtet wird, als es zum Überwinden der Strömungswiderstände erforderlich ist.

Es ist von Vorteil, die Turboladerdrehzahl zu überwachen und bei Überschreiten eines vorgebbaren Drehzahlwertes die Energiezufuhr zur Nacherwärmung abzuschalten, um einer Zerstörung des Turboladers wegen Überdrehung vorzubeugen. Es ist auch zweckmäßig eine Verbrennungsüberwachung vorzusehen, um zu vermeiden, dass bei nicht ordnungsgemäß arbeitender Zündung der dem Abgasstrang zugeführte Kraftstoff unverbrannt in die Atmosphäre gelangt.

Eine weitere vorteilhafte Ausgestaltung verwendet eine elektrische Maschine, die mit dem Turbolader kuppelbar ist, um während des Befüllens der Reifen die erforderliche Drehzahl des Turboladers zu erzeugen. Mit dieser Anordnung ist es auch möglich, den Ladedruck anzuheben, wenn die Reifenbefüllungsanlage nicht verwendet wird.

Um den durch den Turbolader erzeugten Luftdruck zu messen, ist vorzugsweise ein Druckgeber vorgesehen, der den Druck, im Ladeluftkanal erfasst.

Der Druck im Ladeluftkanal, der auch für die Reifendruckregelanlage bereit gestellt wird, hängt bei vorgegebener Motordrehzahl in charakteristischer Weise von dem durch den Ladeluftverdichter erzeugten Volumenstrom ab. Der Druck steigt zunächst mit zunehmendem Volumenstrom an, erreicht dann ein Maximum und fällt bei hohen Volumenströmen wieder ab. Für unterschiedliche Motordrehzahlen verschiebt sich das Druckmaximum und liegt bei unterschiedlichen Volumenstromwerten. Um zum Reifenbefüllen einen ausreichenden Druck zu gewährleisten, schlägt eine vorteilhafte Weiterbildung der Erfindung vor, die Drehzahl der Verbrennungskraftmaschine während des Füllvorgangs und/oder des Entleervorgangs innerhalb vorgebbarer Drehzahlgrenzwerte zu halten. Die Drehzahlgrenzwerte werden so gewählt, dass der Turbolader im Bereich seines maximalen Drucks arbeitet.

Es ist denkbar, dass in besonderen Anwendungsfällen der Erfindung, der durch den Turbolader bereitgestellte Druck nicht immer ausreicht, um die Reifenbefüllung in optimaler Weise vornehmen zu können. Um hier Abhilfe zu schaffen, schlägt eine bevorzugte Weiterbildung der Erfindung vor, eine Nachverdichtungseinrichtung vorzusehen, die den Druck der von dem Turbolader bereitgestellten Druckluft weiter erhöht. Als Nachverdichtungseinrichtung kann ein entsprechend ausgelegter Kompressor verwendet werden, der zwischen dem Turbolader und der Reifenbefüllventilvorrichtung angeordnet ist.

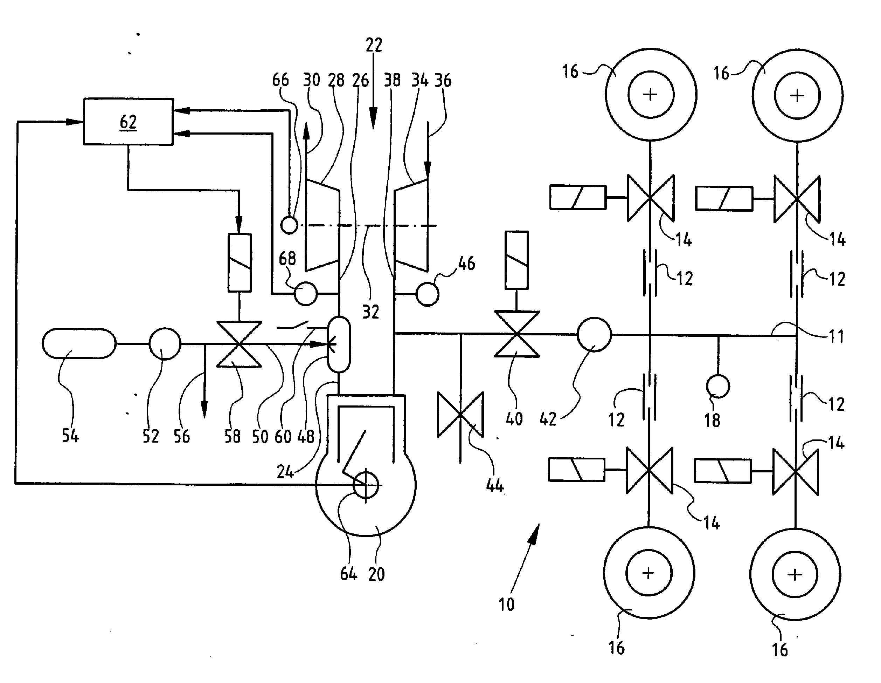

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur zeigt die schematische Darstellung einer erfindungsgemäßen Reifendruckeinstelleinrichtung in Verbindung mit dem Turbolader der Verbrennungsmaschine eines Arbeitsfahrzeugs.

Die im rechten Bildteil der Figur dargestellte Reifendruckeinstellanlage 10 enthält eine Verteilerleitung 11, auch Druckleitung genannt, die über je eine Drehdurchführung 12 und ein zugehöriges Ventil 14 mit den vier Reifen 16 eines nicht näher dargestellten Arbeitsfahrzeugs in Verbindung steht. Die Drehdurchführungen 12 und Ventile 14 können auf übliche Weise ausgebildet sein. Beispielsweise können die Ventile 14 Wegeventile sein. Es kann auch eine den Durchführungen vorgelagerte weitere Ventilanordnung zur Aufbereitung des Versorgungsdrucks vorgesehen sein, die jedoch nicht dargestellt wurde, weil sie nicht Gegenstand der vorliegenden Erfindung ist. In der Druckleitung 11 ist eine Druckmessstelle 18 vorgesehen.

Im linken Bildteil der Figur ist eine Verbrennungskraftmaschine 20 angedeutet, die mit einem Abgasturbolader 22 ausgestattet ist. An den Anschlusskrümmer 24 der Verbrennungskraftmaschine 20 ist der Abgasstrang 26 des Turboladers 22 angeschlossen. Die im Abgasstrang 26 liegende Abgasturbine 28 des Turboladers 22 wird durch das Motorabgas angetrieben, welches durch das Abgasrohr 30 ins Freie tritt. Die Abgasturbine 28 treibt über eine Welle 32 den Ladeluftverdichter 34 des Turboladers 22 an. Der Ladeluftverdichter 34 saugt über den Eintritt 36 Frischluft aus der Atmosphäre an, verdichtet diese und gibt sie über einen Ladeluftkanal 38 an die Verbrennungskraftmaschine 20 ab.

Der Ladeluftkanal 38 steht über ein Verbindungsventil 40 und einen Nachverdichter 42 mit der Druckleitung 11 der Reifendruckeinstellanlage 10 in Verbindung. Der Nachverdichter 42 ist bei den meisten Anwendungsfällen entbehrlich, da der Turbolader 22 in der Regel in der Lage ist, einen ausreichend hohen Druck für die Reifendruckeinstellanlage 10 bereitzustellen. Falls erforderlich kann als Nachverdichter 42 ein üblicher Kompressor eingesetzt werden. Das Verbindungsventil 40 lässt sich elektromagnetisch ansteuern und ist geschlossen, wenn kein elektrisches Signal ansteht. Es kann als Druckregelventil ausgelegt sein, um den Druck für die Reifendruckeinstellanlage 10 optimal einzustellen.

Am Ladeluftkanal 38 ist ein sogenanntes Waste-Gate-Ventil 44 angeschlossen, durch welches sich der Betriebspunkt der Verbrennungskraftmaschine 20 optimal einstellen lässt. Zur Drucküberwachung im Ladeluftkanal 38 ist ein Drucksensor 46 vorgesehen, dessen Drucksignale verwendet werden, um die Motordrehzahl anzupassen. Wenn eine Reifenbefüllung erfolgt, wird die Motordrehzahl derart eingestellt, dass der Turbolader 22 einen ausreichenden Fülldruck zur Verfügung stellt.

In der Nähe des Anschlusskrümmers 24 ist in den Abgasstrang 26 ein Brennraum 48 integriert. In den Brennraum 48 mündet eine mit einer Kraftstoffleitung 50 verbundene Düse. Die Kraftstoffförderpumpe 52 des Arbeitsfahrzeugs, die Kraftstoff aus einem Kraftstofftank 54 für die nicht näher dargestellte Einspritzpumpe 56 der Verbrennungskraftmaschine 20 zur Verfügung stellt, liefert auch Kraftstoff an die Kraftstoffleitung 50. Ein in der Kraftstoffleitung 50 angeordnetes Kraftstoffventil 58 steuert den Kraftstoffzufluss zu der Düse. Wird das Kraftstoffventil 58 geöffnet, so wird gleichzeitig eine Zündeinrichtung 60 aktiviert, um den aus der Düse in den Brennraum 48 austretenden Kraftstoff zu entzünden, so dass dieser verbrennt und das aus der Verbrennungskraftmaschine 20 austretende Abgas weiter erhitzt.

Das Kraftstoffventil 58 wird elektromagnetisch betätigt und durch eine elektrische Steuereinrichtung 62 angesteuert. Die Steuereinrichtung 62 empfängt Signale von einem die Kraftmaschinendrehzahl erfassenden Drehzahlsensor 64, einem Turboladerdrehzahlsensor 66 und einem Temperatursensor 68, der die Abgastemperatur im Abgasstrang 26 hinter der Brennkammer 48 erfasst.

Bei geringer Motordrehzahl steuert die Steuereinrichtung 62 das Kraftstoffventil 58 in Abhängigkeit der Turboladerdrehzahl an, um eine Nacherwärmung des Motorabgases vorzunehmen und die Turboladerdrehzahl auf einem Mindestwert zu halten. Sollte der Temperatursensor 68 eine zu hohe Abgastemperatur signalisieren, wird das Kraftstoffventil 58 geschlossen. Das Signal des Temperatursensors 68 kann auch verwendet werden, um festzustellen, ob die Zündeinrichtung 60 richtig arbeitet, denn wenn bei geöffnetem Kraftstoffventil 58 keine entsprechende Erhöhung der Abgastemperatur festgestellt wird, wurde der Kraftstoff offenbar nicht entzündet. In diesem Fall schließt die Steuereinrichtung 62 das Kraftstoffventil 58, um eine Belastung des Abgases mit unverbranntem Kraftstoff zu vermeiden.

Gegebenenfalls erfasst die Steuereinrichtung 62 auch die Ausgangssignale des Drucksensors 46, um das Kraftstoffventil 58 und mit ihm die Nacherwärmung zu steuern. Mit abnehmendem Druck in dem Ladeluftkanal 38 wird das Kraftstoffventil 58 geöffnet, um die Verbrennung zu steigern und um den Turbolader zu beschleunigen, und umgekehrt.
Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Reifendruckeinstellanlage zur Einstellung des Drucks der an einem Fahrzeug montierten Reifen (16) mit einer zwischen einer Druckluftquelle und den Reifen (16) angeordneten Ventilanordnung (14), **dadurch gekennzeichnet, dass** als Druckluftquelle ein Turbolader (22) des Fahrzeugverbrennungsmotors (20) dient, dessen Ladeluftkanal (38) mit der Ventilanordnung (14) verbindbar ist, und dass in den Abgasstrang (26) des Turboladers (22) im Bereich vor der Abgasturbine (28) eine Abgasnacherwärmungseinrichtung (48, 50, 60, 58) vorgesehen ist.

2. Reifendruckeinstellanlage nach Anspruch 1, **dadurch gekennzeichnet, dass** zwischen dem Ladeluftkanal (38) und den zu den Reifen (16) führenden Verteilerleitungen (11) wenigstens ein Ventil (40) angeordnet ist.

3. Reifendruckeinstellanlage nach Anspruch 1 oder 2, **dadurch gekennzeichnet, dass** an den Ladeluftkanal (38) ein Waste-Gate-Ventil (44) angeschlossen ist.

4. Reifendruckeinstellanlage nach Anspruch 1, **dadurch gekennzeichnet, dass** die Abgasnacherwärmungseinrichtung wenigstens einen Brennraum (48) enthält, in dem Kraftstoff verbrennbar ist.

5. Reifendruckeinstellanlage nach Anspruch 4, **dadurch gekennzeichnet, dass** die Kraftstoffzufuhr (50) zum Brennraum (48) durch ein Kraftstoffventil (58) steuerbar ist.

6. Reifendruckeinstellanlage nach Anspruch 4 oder 5, **dadurch gekennzeichnet, dass** die dem Brennraum (48) zugeführte Kraftstoffmenge in Abhängigkeit der Verbrennungskraftmaschinendrehzahl, der Turboladerdrehzahl und/oder der Temperatur der in die Abgasturbine (28) eintretenden Abgasluft einstellbar ist.

7. Reifendruckeinstellanlage nach einem der Ansprüche 1 bis 6, **dadurch gekennzeichnet, dass** im Abgasstrang (26) des Turboladers (22) im Bereich vor der Abgasturbine (28), gegebenenfalls zwischen einem Brennraum (48) und der Abgasturbine (28), ein Temperaturgeber (68) angeordnet ist.

8. Reifendruckeinstellanlage nach einem der Ansprüche 1 bis 7, **dadurch gekennzeichnet, dass** der Turbolader mit einer elektrischen Maschine kuppelbar ist, die erforderlichenfalls die für das Befüllen der Reifen erforderliche Drehzahl des Turboladers aufbringt.

9. Reifendruckeinstellanlage nach einem der Ansprüche 1 bis 8, **dadurch gekennzeichnet, dass** ein Druckgeber (46) vorgesehen ist, der den Druck im Ladeluftkanal (38) erfasst.

10. Reifendruckeinstellanlage nach einem der Ansprüche 1 bis 9, **dadurch gekennzeichnet, dass** die Drehzahl der Verbrennungskraftmaschine (20) während des Füllvorgangs und/oder des Entleervorgangs innerhalb vorgebbarer Drehzahlgrenzwerte gehalten wird.

11. Reifendruckeinstellanlage nach einem der Ansprüche 1 bis 10, **dadurch gekennzeichnet, dass** eine Nachverdichtungseinrichtung (42) vorgesehen ist, die den Druck der von dem Turbolader (22) bereitgestellten Druckluft erhöht.

## Claims

1. Combination of a loader device (20) and a carrier structure (22) which is embodied as a frame of a tractor, wherein the loader device has a first component (24) and a second component (26) which is pivotably connected to the first component (24), and a third component (28) which can be connected to the carrier structure (22), and when the first and second components (24, 26) move said third component (28) moves in the direction of the carrier structure (22) or away from the carrier structure (22), wherein such a movement brings about essentially automatic attachment to or detachment from the carrier structure (22), wherein at least one connecting element (68, 70) is provided which effectively connects the carrier structure (22) to the third component (28), **characterized in that** a cam mechanism (82) is provided which is attached to at least one of the first and third components (24, 28), wherein the cam mechanism (82) permits adjustable movements for at least one of the first, second or third components (24, 26, 28) in relation to the carrier structure (22) in order to permit the device (20) to be detached from the carrier structure (22).

2. Combination according to Claim 1, **characterized in that** the cam mechanism (82) can be moved between first and second positions in order to limit or permit a movement of the device (20) in relation to the carrier structure (22) in a releasable fashion.

3. Combination according to one of Claims 1 or 2, **characterized in that** the cam mechanism (82) can be engaged with the first component (24), wherein the cam mechanism (82) can be rotated between alternating positions in order either to prevent or permit a movement of at least one of the first, second or third components.

4. Combination according to one of Claims 1 to 3, **characterized in that** the cam mechanism (82) has both a body (84) and an extension element (90), wherein the extension element (90) is arranged essentially in a housing (88) which is formed on the body (84), and said extension element (90) on said housing (88) is optionally adjustable in order to permit abutment with the first component (24).

5. Combination according to one of Claims 1 to 4, **characterized in that** the first component (24) is designed to be held by the carrier structure (22), wherein said first component (24) can be moved in the direction of the carrier structure (22) or away from the carrier structure (22), and **in that** the second component (26) is designed to hold a tool (38).

6. Combination according to one of Claims 1 to 5, **characterized in that** the third component (28) is connected to the first component (24) for operation in a first and a second mode, wherein the operation of the first component (24) in the second mode brings about a movement of the third component (28), during which movement the third component (28) is moved into an essentially non-horizontal position in relation to the carrier structure (22), and as a result the third component (28) assists stabilization of the device (20) and of a tool (38) with respect to a surface of the ground.

7. Combination according to one of Claims 1 to 6, **characterized in that**, in a first position, the third component (28) is oriented essentially horizontally in relation to the carrier structure (22), and in a second position said third component (28) is oriented essentially vertically in relation to the carrier structure (22).

8. Combination according to one of Claims 1 to 7, **characterized in that** the third component (28) has a part (66) which can be engaged with the surface of the ground and which assists stabilization of the first and second components (24, 26) and of the tool (38) with respect to the surface of the ground.

9. Combination according to Claim 8, **characterized in that** the part (66) which can be engaged with the surface of the ground has at least one element (68, 70) which is held by the carrier structure (22) and assists the detachment of the first and third components (24, 28) from the carrier structure, while at least one of the first and third components (24, 28) is being moved.

10. Combination according to Claim 9, **characterized in that** the at least one element (68, 70) comprises a part which is embodied as a counterpart to the carrier structure (22) and with which it engages.

11. Combination according to one of Claims 9 or 10, **characterized in that** the at least one element (68, 70) is embodied as connecting elements which are in contact with the carrier structure (22) and which engage in the carrier structure (22) in a releasable fashion as a counterpart thereto.

12. Combination according to Claim 11, **characterized in that** the connecting elements are arranged spaced apart from one another and can be fitted onto the carrier structure (22).

13. Combination according to one of Claims 1 to 12, **characterized in that** the combination can be operated in a first mode and a second mode, wherein the first component (24) has a receptacle area (48) which contributes to the connection to the carrier structure (22), and the first component (24) is connected to the carrier structure (22) in the first mode and is disconnected from the carrier structure (22) in the second mode, wherein the third component (28) extends essentially laterally from the first component (24) and can assume first and second positions in relation to the carrier structure (22), wherein each of the first and third components (24, 26) respond to a movement of the first component (24) in order either to connect the loader device (20) to the carrier structure (22) or disconnect it therefrom without locking mechanisms which have to be operated manually in order to bring about such attachment or detachment being necessary.

14. Combination according to one of Claims 1 to 13, **characterized in that** the carrier structure (22) is embodied as a frame of a tractor, the first component (24) is embodied as a mast and the second component (26) is embodied as a rocker (26) which is connected to the mast, wherein at least one actuating device (64) is provided for optionally performing retraction or extension, which actuating device (64) is connected to the rocker and to the mast, and wherein the actuating device (64) permits at least one region of the rocker and of the mast to be repositioned in relation to one another, the third component (28) is embodied as a strut (28) which is operatively connected to at least the mast or the rocker, wherein the strut comprises a component (66) which has both an engagement face for engaging the mast in an abutting fashion and a region for connecting the component (66) to the frame, wherein the cam mechanism (82) is connected to the strut and has at least one body (84) and an activation element which is preferably embodied as a handle (86), wherein the activation element can be moved between at least a first and a second position, wherein these positions are connected to the attachment and detachment of the loader device in relation to the frame, wherein the positioning of the activation element in its first position causes at least part of the body (84) to essentially abut against the mast (24), wherein the positioning of the activation element into its second position causes at least part of the body (84) to be moved away from the mast, wherein the positioning of the activation element into its second position essentially permits automatic detachment of the loader device (20) from the frame while the actuating device (64) is extended.

15. Combination according to one of Claims 1 to 14, **characterized in that** the carrier structure (22) is embodied as a frame of a tractor, the first component (24) is embodied as a mast, wherein the mast can be supported at a first location on the frame (22), and the third component (26) is embodied as a rocker which is pivotably connected to the mast, and in addition an extendable element (64) is provided which can be operated in order to move the rocker in relation to the mast, and the third component (28) is embodied as a strut which is pivotably connected to the mast and is designed to connect to the frame at its second location which is spaced apart from the first location, and furthermore the cam mechanism (82) is embodied in such a way that the strut and the mast are held in relation to one another, wherein the cam mechanism (82) in its first position permits the strut to be disconnected from the frame, and said cam mechanism (82) can assume a position in which the strut engages with the surface of the ground, with the result that the mast is essentially lifted off from the frame and the device (20) is supported on the surface of the ground.

## Revendications

1. Combinaison composée d'un dispositif chargeur (20) et d'une structure de support (22) prenant la forme d'un châssis de tracteur, le dispositif chargeur comportant un premier élément (24) et un deuxième élément (26) relié de façon pivotante au premier élément (24), et d'un troisième élément (28) pouvant être relié à la structure de support (22) et se déplaçant, en cas de déplacement du premier et du deuxième élément (24, 26), en direction de la structure de support (22) ou dans la direction opposée à la structure de support (22), un tel déplacement provoquant un montage ou un démontage pour l'essentiel automatique de la structure de support (22), au moins un élément de liaison (68, 70) étant prévu, ledit élément reliant efficacement la structure de support (22) au troisième élément (28), **caractérisée en ce qu'**un mécanisme de came (82) est prévu, ledit mécanisme étant fixé au moins à un des éléments parmi les premier et troisième éléments (24, 28), le mécanisme de came (82) permettant la réalisation d'un mouvement de réglage au moins pour un des éléments parmi les premier, deuxième ou troisième éléments (24, 26, 28) par rapport à la structure de support (22), pour permettre un démontage du dispositif (20) hors de la structure de support (22).

2. Combinaison selon la revendication 1, **caractérisée en ce que** le mécanisme de came (82) est mobile entre une première et une deuxième position, pour limiter ou permettre au choix un déplacement du dispositif (20) par rapport à la structure de support (22).

3. Combinaison selon l'une quelconque des revendications 1 ou 2, **caractérisée en ce que** le mécanisme de came (82) peut être mis en prise avec le premier élément (24), sachant que le mécanisme de came (82) peut pivoter entre des positions variables, soit pour empêcher ou soit pour permettre le déplacement d'au moins un élément parmi les premier, deuxième ou troisième éléments.

4. Combinaison selon l'une quelconque des revendications 1 à 3, **caractérisée en ce que** le mécanisme de came (82) comporte tant un corps (84) qu'un prolongement (90), le prolongement (90) étant disposé pour l'essentiel dans un boîtier (88) prenant pour l'essentiel la forme d'un corps (84) et peut être réglé au choix pour permettre une butée avec le premier élément (24).

5. Combinaison selon l'une quelconque des revendications 1 à 4, **caractérisée en ce que** le premier élément (24) prend la forme d'un logement traversant la structure de support (22), celui-ci étant mobile en direction de la structure de support (22) ou hors de la structure de support (22), et **en ce que** le deuxième élément (26) prend la forme d'un logement d'un outil (38).

6. Combinaison selon l'une quelconque des revendications 1 à 5, **caractérisée en ce que** le troisième élément (28) est relié à un premier élément (24) pouvant être entraîné dans un premier et un second mode, l'entraînement du premier élément (24) dans le second mode provoquant un mouvement du troisième élément (28) dans lequel le troisième élément (28) est amené dans une position pour l'essentiel non horizontale par rapport à la structure de support (22), le troisième élément (28) soutenant ainsi la stabilisation du dispositif (20) et d'un outil (38) par rapport à la surface de plancher.

7. Combinaison selon l'une quelconque des revendications 1 à 6, **caractérisée en ce que** le troisième élément (28) est orienté dans une première position pour l'essentiel horizontale par rapport à la structure de support (22) et dans une deuxième position pour l'essentiel verticale par rapport à la structure de support (22).

8. Combinaison selon l'une quelconque des revendications 1 à 7, **caractérisée en ce que** le troisième élément (28) comporte une partie (66) pouvant être amenée en prise avec la surface de plancher, ladite pièce soutenant la stabilisation du premier et du deuxième élément (24, 26) et de l'outil (38) par rapport à la surface de plancher.

9. Combinaison selon la revendication 8, **caractérisée en ce que** la partie (66) pouvant être amenée en prise avec la surface de plancher comporte au moins un élément (68, 70) logé par la structure de support (22) et soutenant le démontage du premier et du troisième élément (24, 28) hors de la structure de support, tandis qu'au moins un des éléments parmi le premier et le troisième élément (24, 28) est déplacé.

10. Combinaison selon la revendication 9, **caractérisée en ce que** l'au moins un élément (68, 70) comprend une partie prenant la forme d'une contre-pièce par rapport à la structure de support (22) et entre en prise avec elle.

11. Combinaison selon l'une quelconque des revendications 9 ou 10, **caractérisée en ce que** l'au moins un élément (68, 70) prend la forme d'éléments de liaison en contact avec la structure de support (22), entrant en prise de façon amovible avec celle-ci sous la forme d'une contre-pièce de la structure de support (22).

12. Combinaison selon la revendication 11, **caractérisée en ce que** les éléments de liaison sont disposés à une certaine distance les uns des autres et peuvent être placés sur la structure de support (22).

13. Combinaison selon l'une quelconque des revendications 1 à 12, **caractérisée en ce que** la combinaison peut être réalisée dans un premier et un second mode, le premier élément (24) comportant une zone de logement (48) contribuant à la liaison avec la structure de support (22) et le premier élément (24) étant relié dans le premier mode à la structure de support (22) et séparée dans le second mode de la structure de support (22), le troisième élément (28) s'étendant pour l'essentiel à côté du premier élément (24) et pouvant se placer dans la première et la deuxième position par rapport à la structure de support (22), chacun des éléments parmi le premier et le troisième élément (24, 28) réagissant à un mouvement du premier élément (24), pour soit relier le dispositif chargeur (20) à la structure de support (22) soit le séparer d'elle, sans que des mécanismes de verrouillage manuels ne soient nécessaires pour réaliser un tel montage ou démontage.

14. Combinaison selon l'une quelconque des revendications 1 à 13, **caractérisée en ce que** la structure de support (22) prend la forme d'un châssis de tracteur, le premier élément (24) prenant la forme d'un mât, le deuxième élément (26) prenant la forme d'une bascule (26) reliée au mât, au moins un dispositif de réglage (64) étant prévu au choix pour le mouvement entrant et sortant, ledit dispositif étant relié à la bascule et au mât, le dispositif de réglage (64) permettant qu'au moins une zone de la bascule et du mât soit positionnable par rapport à l'autre zone, le troisième élément (28) étant réalisé sous la forme d'un montant (28) qui est relié en fonctionnement au moins au mât ou à la bascule, le montant comprenant un élément (66) comprenant une surface d'engrenage pour amener le mât en prise en butée et une zone de jonction de l'élément (66) avec le châssis, le mécanisme de came (82) étant relié au montant et comportant au moins un corps (84) et un élément d'actionnement prenant de préférence la forme d'une poignée (86), l'élément d'actionnement étant mobile entre au moins une première et une deuxième position, ces positions étant liées au montage et démontage du dispositif chargeur par rapport au châssis, le positionnement de l'élément d'actionnement dans sa première position ayant pour effet qu'au moins une partie du corps (84) bute pour l'essentiel contre le mât (24), le positionnement de l'élément d'actionnement dans sa deuxième position ayant pour effet qu'au moins une partie du corps (84) est éloignée du mât, le positionnement de l'élément d'actionnement dans sa deuxième position permettant pour l'essentiel un démontage automatique du dispositif chargeur (20) hors du châssis lors de la sortie du dispositif de réglage (64).

15. Combinaison selon l'une quelconque des revendications 1 à 14, **caractérisée en ce que** la structure de support (22) prend la forme d'un châssis de tracteur, le premier élément (24) prenant la forme d'un mât, le mât pouvant s'appuyer contre un premier emplacement du châssis (22) et le troisième élément (26) prenant la forme d'une bascule reliée de façon pivotante au mât, un élément (64) sortable étant en outre prévu, lequel peut être actionné pour déplacer la bascule par rapport au mât, le troisième élément (28) prenant la forme d'un montant relié de façon pivotante au mât étant réalisé pour la jonction avec le châssis au niveau d'un deuxième emplacement éloigné du premier emplacement, le mécanisme de came (82) étant en outre réalisé de telle sorte que le montant et le mât sont maintenus l'un par rapport à l'autre, le mécanisme de came (82) permettant dans une première position que le montant soit séparé du châssis et puisse prendre une position dans laquelle le montant est en prise avec la surface de plancher, de façon à ce que le mât soit pour l'essentiel soulevé du châssis et que le dispositif (20) soit supporté sur la surface de plancher.
